# EUROPÄISCHE PATENTSCHRIFT

(11) **EP 3 871 874 B1**
(45) Veröffentlichungstag und Bekanntmachung des Hinweises auf die Patenterteilung: **06.09.2023**
(21) Anmeldenummer: 20185881.8
(22) Anmeldetag: 15.07.2020
(51) Int. Cl.: B32B 3/08, B32B 5/02, B32B 7/05, B32B 7/08, B32B 7/09, B32B 27/22, B32B 27/30, D06N 3/06, D06N 3/18, D06N 7/00

(54) **SCHUTZMATTE**
PROTECTIVE MAT
TAPIS DE PROTECTION

(43) Veröffentlichungstag der Anmeldung: 01.09.2021
(73) Patentinhaber: BASF SE, 67056 Ludwigshafen (DE)
(72) Erfinder: HANAUER, Tobias, 67056 Ludwigshafen (DE); GEIGER, Udo, 67136 Fußgönheim (DE)
(74) Vertreter: BASF IP Association

(56) Entgegenhaltungen:
- DE-A1- 3 012 245
- DE-A1- 3 017 112
- US-A- 4 885 659
- US-A1- 2013 210 300
- US-A1- 2014 227 484

## Beschreibung

Die Erfindung betrifft eine Schutzmatte umfassend eine erste Deckschicht, eine zweite Deckschicht und eine zwischen der ersten Deckschicht und der zweiten Deckschicht angeordneten Zwischenschicht aus einem hitzebeständigen Material.

Schutzmatten sind für diverse Anwendungen aus dem Stand der Technik bekannt. Im Kraftfahrzeugbereich beispielsweise sind Schutzmatten für den Außenbereich und für den Innenbereich bekannt. Im Außenbereich werden sie unter anderem eingesetzt, um die Motorhaube oder die Scheiben eines Fahrzeugs gegen Kälte und Verschmutzung zu schützen. Im Innenbereich werden Schutzmatten eingesetzt, um den Fahrgastraum oder den Kofferraum vor Verschmutzung zu schützen. Derartige Matten sollen schmutzabweisend, gegebenenfalls wärmeisolierend und einfach in der Handhabung sein.

Auch im industriellen Umfeld werden Schutzmatten eingesetzt, wobei die Anforderungen an die Matten andere sind als im privaten Umfeld. So werden Schutzmatten beispielsweise auch als Feuerschutzmatten oder Spritzschutzmatten bei Schweißarbeiten eingesetzt, was voraussetzt, dass die Matten zumindest für eine gewisse Zeitspanne hohen Temperaturen oder glühenden Metallteilen widerstehen müssen.

Das Dokument DE 30 12 245 A1 beschreibt eine derartige hitzebeständige Schutzmatte zum Schutz vor Spritzern aus heißen Feststoffen oder Flüssigkeiten. Die Matte besteht aus einem flexiblen hitzefesten Träger, dessen Oberfläche mit einer Beschichtung aus einem Organopolysiloxanelastomer versehen ist, in das ein anorganisches stückiges zellulares Füllmaterial eingearbeitet ist.

Die aus dem Stand der Technik bekannten Schutzmatten sind jeweils für bestimmte Einsatzzwecke konzipiert und optimiert, sind jedoch nur begrenzt für andere Einsatzbereiche geeignet. So ist eine Feuerfestmatte beispielsweise häufig schwer und unhandlich. Leichte Matten hingegen sind häufig nicht hitzebeständig.

Insbesondere in der Prozessindustrie wie der Petrochemie oder in Energieerzeugungsanlagen bilden auch Gitterroste den Boden von Gebäuden und Anlagen. Werden dort Arbeiten an Apparaten oder Rohrleitungen durchgeführt, besteht die Gefahr, dass Metallteile wie Schrauben oder Muttern durch den Gitterrost nach unten fallen, was ein Sicherheitsrisiko für Personen darstellt, die sich unterhalb des Gitterrostes befinden. Ebenso stellen auslaufende Flüssigkeiten, beispielsweise aus Aggregaten oder Rohrleitungen bei Montagearbeiten, oder heiße Metallpartikel beim Schweißen eine Gefahr dar.

Es stellte sich die Aufgabe, eine Schutzmatte für den Einsatz im industriellen Umfeld bereitzustellen, die mechanisch stabil, hitzebeständig, chemikalienbeständig, handlich und leicht ist, sodass sie bei Bedarf schnell und einfach am Arbeitsort ausgebreitet werden kann. Damit die Matte universell einsetzbar ist, sollte sie auch für den Einsatz in explosionsgefährdeten Bereichen der Prozessindustrie geeignet sein.

Diese Aufgabe wird erfindungsgemäß gelöst durch eine Schutzmatte gemäß Anspruch 1. Vorteilhafte Ausgestaltungen der Schutzmatte sind in den Ansprüchen 2 bis 10 angegeben. Anspruch 11 ist gerichtet auf eine Verwendung der erfindungsgemäßen Schutzmatte.

Die erfindungsgemäße Schutzmatte umfasst eine erste Deckschicht, eine zweite Deckschicht und eine zwischen der ersten Deckschicht und der zweiten Deckschicht angeordneten Zwischenschicht aus einem hitzebeständigen Material. Die erste Deckschicht und die zweite Deckschicht sind aus einem elektrisch leitfähigen Material gefertigt und über elektrisch leitfähige Verbindungselemente miteinander verbunden. Die erfindungsgemäße Schutzmatte ist aufgrund ihres Aufbaus vielseitig einsetzbar. Die hitzebeständige Zwischenschicht ermöglicht den Einsatz der Schutzmatte bei Arbeiten mit offenem Feuer oder Funkenflug, beispielsweise beim Schweißen oder Trennschleifen. Ebenso ermöglicht sie das Auffangen heißer Flüssigkeiten. Aufgrund der elektrischen Leitfähigkeit der beiden Deckschichten und der elektrisch leitfähigen Verbindung der beiden Deckschichten ist die Schutzmatte aber auch zum Einsatz in explosionsgefährdeten Bereichen geeignet, indem das Entstehen von Zündquellen durch elektrostatische Aufladung der Schutzmatte verhindert wird.

Unter "elektrisch leitfähig" wird in diesem Zusammenhang verstanden, dass der Oberflächenwiderstand maximal 10⁴ Ω (Ohm) beträgt. Der Oberflächenwiderstand ist dabei der elektrische Widerstand gemessen auf der Oberfläche eines Gegenstandes. Er wird zwischen zwei parallelen Elektroden geringer Breite und jeweils 100 mm Länge, die 10 mm auseinander liegen und mit der zu messenden Oberfläche Kontakt haben, gemessen. Die Messspannung beträgt mindestens 100 V, abhängig vom Widerstandsbereich. Dies entspricht der Definition in den Technischen Regeln für Gefahrstoffe (TRGS 727), veröffentlicht im Gemeinsames Ministerialblatt (GMBI) des Deutschen Bundesministeriums für Arbeit und Soziales in der Fassung vom 29.07.2016.

Unter "hitzebeständig" wird in diesem Zusammenhang verstanden, dass das Material der Zwischenschicht einer Temperatur von 1.000°C dauerhaft standhält und nicht zerstört wird.

Bevorzugt ist das Material der ersten Deckschicht, der zweiten Deckschicht oder der ersten und der zweiten Deckschicht ein elektrisch leitfähiger Kunststoff oder eine Materialmischung enthaltend Kunststoffe, wobei mindestens eine Komponente der Materialmischung elektrisch leitfähig ist. Der Kunststoff oder die Materialmischung kann einzelne Fäden oder Garne umfassen, die zu einem Gewebe oder Gestrick verarbeitet sind. Die Deckschichten können auch Grundstrukturen oder Stützstrukturen aus einem ersten Material und ein auf diese Grund- oder Stützstrukturen aufgebrachten zweiten Material aufgebaut sein. Beispiele hierfür sind Planen, die ein Fasergerüst aus einem ersten Material aufweisen, das mit einem zweiten Material flächig beschichtet ist.

Besonders bevorzugt ist das Material der ersten Deckschicht, der zweiten Deckschicht oder der ersten und der zweiten Deckschicht ausgewählt aus der Gruppe der Weich-Polyvinylchloride (Weich-PVC, PVC-P). Im Falle einer Materialmischung, beispielsweise einer Plane, ist vorzugsweise die durchgängige, nicht unterbrochene Schicht aus einem Weich-PVC hergestellt.

In einer bevorzugten Ausführungsform der erfindungsgemäßen Schutzmatte ist das Material der ersten Deckschicht, das Material der zweiten Deckschicht oder das Material der ersten und der zweiten Deckschicht ein säurebeständiger Kunststoff. Diese Ausführungsform der Schutzmatte eignet sich besonders für Arbeiten, bei denen es zum Austritt von säurehaltigen Flüssigkeiten kommen kann. Unter "säurebeständig" wird in diesem Zusammenhang verstanden, dass das Material bei einer Tropfenbeaufschlagung oder Schwallbeaufschlagung mit einer Säure mittlerer Konzentration mindestens mehrere Stunden und mit einer Säure hoher Konzentration mindestens eine Viertelstunde standhält, sodass die Säure nicht durch das Material dringen kann.

Bevorzugt ist das Material der Zwischenschicht ausgewählt aus der Gruppe der Gewebe, Gestricke oder Vliese auf Basis von Glasfasern und/oder Keramikfasern. Glasfasern und/oder Keramikfasern bilden dabei den strukturellen Kern der Zwischenschicht. Die Zwischenschicht kann weitere Komponenten enthalten, beispielsweise Beschichtungen oder Imprägnierungen aus Metallen, Kunststoffen oder Mischmaterialien daraus.

Weiterhin ist bevorzugt, dass das Material der Zwischenschicht eine Dauer-Hitzebeständigkeit von 1.000°C aufweist und auch kurzzeitigen Hitzeeinwirkungen von bis zu 1.600°C standhält, ohne zerstört zu werden.

Erfindungsgemäß sind die erste Deckschicht und die zweite Deckschicht über elektrisch leitfähige Verbindungselemente miteinander verbunden, sodass sich zwischen den beiden Schichten kein elektrisches Potenzial aufbauen kann. Vorzugsweise ist das Material der Verbindungselemente ausgewählt aus der Gruppe der elektrisch leitfähigen Kunststoffe oder Kunststoff-Mischmaterialien, besonders bevorzugt elektrisch leitfähige Polyester-Mischmaterialien, insbesondere elektrisch leitfähige Polyester-Baumwoll-Mischmaterialien.

Erfindungsgemäß sind die Verbindungselemente als Garne oder Fäden gestaltet und die Befestigung der Verbindungselemente an den beiden Deckschichten wird durch eine Naht oder mehrere Nähte gebildet.

Vorzugsweise ist die Außenseite der Garne oder Fäden aus einem elektrisch leitfähigen Material gestaltet. Bei Kunststoff-Mischmaterialien kann beispielsweise ein Kern der Faser aus einem nicht leitfähigen Kunststoff, beispielsweise einem Polyesterwerkstoff, mit einem leitfähigen Material ummantelt sein, beispielsweise Baumwolle oder Carbon. Derartige Werkstoffe verbinden in vorteilhafter Weise die Eigenschaften Reißfestigkeit und Leitfähigkeit.

In einer bevorzugten Ausführungsform der erfindungsgemäßen Schutzmatte ist die Verbindung zwischen der ersten Deckschicht und der zweiten Deckschicht mittels der Verbindungselemente derart ausgeführt, dass an jeder Stelle der Schutzmatte ihr Ableitwiderstand einen vorgegebenen Maximalwert nicht übersteigt. Unter dem Ableitwiderstand wird dabei der elektrische Widerstand der Schutzmatte gegen das Erdpotenzial verstanden. Besonders bevorzugt beträgt der vorgegebene Maximalwert des Ableitwiderstandes 10⁴ Ω.

Bei einer Ausführungsform mit Nähten als Befestigung der Verbindungselemente sind die Nähte bevorzugt als mindestens zwei Scharen von Nahtreihen ausgeführt, wobei die Nähte in jeder Schar parallel zueinander verlaufen, und die mindestens zwei Scharen sich in einem Winkel von 30° bis 90° schneiden. Besonders bevorzugt sind die Nähte bei dieser Ausführungsform als zwei Scharen von Nahtreihen ausgeführt, die sich in einem Winkel von 40° bis 50°, insbesondere von 45° schneiden. Der Abstand zwischen zwei Nahtreihen einer Schar beträgt vorzugsweise von 10 bis 50 cm, besonders bevorzugt von 20 bis 40 cm.

Die erfindungsgemäße Schutzmatte kann jede zweckmäßige Größe und Form aufweisen. Sie kann beispielsweise rund, oval, mehreckig, rechteckig oder quadratisch sein. Ihre Größe ist vorteilhaft so gewählt, dass der gesamte Arbeitsbereich abgedeckt wird. Als zweckmäßig haben sich Flächen von 0,2 bis 1 m² erwiesen. Bei rechteckigen Querschnittsflächen betragen die Kantenlängen bevorzugt von 50 bis 150 cm.

In einer bevorzugten Ausführungsform weist die Schutzmatte einen umlaufenden Rand auf, der entlang von Biegelinien faltbar ist. Bei Verwendung der Schutzmatte kann der Rand nach oben gebogen werden, sodass eine Wanne entsteht. Derartige Schutzmatten sind besonders geeignet zum Auffangen von Flüssigkeiten oder anderen fließfähigen Substanzen. Weiterhin bevorzugt sind bei dieser Ausführungsform in dem der Biegelinie zugewandten Teil des Randes zumindest teilweise Verstärkungselemente vorhanden. Besonders bevorzugt sind die Verstärkungselemente als Nähte ausgebildet. Die Verstärkungselemente unterstützen die Stabilität des Randes, sodass die Wannenfunktion einfacher und dauerhafter aufrechterhalten werden kann. Sofern die Schutzmatte eine eckige Form aufweist, ist es bevorzugt, wenn die Ränder der jeweiligen Kanten in den Ecken miteinander verbunden, insbesondere vernäht, sind, um den Wanneneffekt zu unterstützen.

In einer vorteilhaften Ausgestaltung dieser Ausführungsform weist die Schutzmatte eine rechteckige Form auf, und auf jeder Seite des Rechtecks ist mindestens ein Verstärkungselement vorhanden.

In einer weiteren vorteilhaften Ausgestaltung dieser Ausführungsform weist die Schutzmatte an festgelegten Punkten des umlaufenden Randes Fixiermittel zum Fixieren von Abschnitten des Randes auf. Bei einer Schutzmatte mit eckiger Form sind die Fixiermittel vorzugsweise in den Ecken vorgesehen. Als Fixiermittel können beispielsweise Druckknöpfe, Nähte oder Ösen mit Schlaufen zum Durchziehen durch die Ösen vorgesehen sein. Durch die Fixiermittel lassen sich insbesondere die Eckbereiche des aufgestellten Randes verstärken, was zu einer höheren Stabilität des Randes beiträgt.

In einer bevorzugten Ausführungsform weist die Schutzmatte mindestens ein Befestigungsmittel zum Befestigen der Schutzmatte an Gegenständen oder Einrichtungen auf. Besonders bevorzugt ist das mindestens eine Befestigungsmittel an mindestens einer Außenkante oder mindestens einem Rand der Schutzmatte angebracht. In einer Variante handelt es sich bei dem Befestigungsmittel um eine Lasche oder eine Schlaufe an mindestens einer Außenkante oder mindestens einem Rand der Schutzmatte. Eine derartige Lasche oder Schlaufe hat den Vorteil, dass die Schutzmatte auf einfache Weise an dem Arbeitsort befestigt werden kann, beispielsweise an einem Pfosten, Bauteil oder einem Gitterrost, auf dem die Matte aufliegt. Weiterhin kann eine Lasche oder Schlaufe genutzt werden, um eine aufgerollte Schutzmatte zu fixieren.

In einer bevorzugten Ausführungsform weist die Schutzmatte mindestens ein Befestigungsmittel zum Befestigen der Schutzmatte an einer weiteren gleichartigen Schutzmatte auf. Besonders bevorzugt ist das mindestens eine Befestigungsmittel an mindestens einer Außenkante oder mindestens einem Rand der Schutzmatte angebracht. Vorzugsweise handelt es sich bei diesen Befestigungsmitteln um Laschen oder Verzurreinrichtungen. Diese Befestigungsmittel erlauben die einfache modulare Verbindung von erfindungsgemäßen Schutzmatten, wodurch auch grö-ßere Arbeitsflächen problemlos abgesichert werden können. Je nach Ausgestaltung können die Befestigungsmittel alternativ für die Befestigung von Schutzmatten untereinander oder zur Befestigung von Schutzmatten an Gegenständen oder Einrichtungen vorgesehen sein.

Ein weiterer Gegenstand der Erfindung ist die Verwendung der erfindungsgemäßen Schutzmatte zur Abdeckung von durchlässigen Tragböden, insbesondere Gitterrosten. Die Schutzmatte kann vielseitig verwendet werden, beispielsweise als Auffangwanne für Flüssigkeiten oder heiße Metallpartikel bei Schweißarbeiten, zur sicheren Ablage von Kleinteilen wie Schrauben oder Muttern, oder zur Ablage von verschmutzten Bauteilen oder Werkzeugen. Im Vergleich zu aus dem Stand der Technik bekannten Matten ist die erfindungsgemäße Schutzmatte universell für unterschiedliche Zwecke einsetzbar und leicht zu handhaben.

### Beispiel

Eine erfindungsgemäße Schutzmatte wurde in zwei unterschiedlichen Größen hergestellt und auf ihre elektrische Leitfähigkeit sowie chemische Beständigkeit hin untersucht. Die erste und die zweite Deckschicht waren aus einem Luttenmaterial gefertigt, dessen Kern ein Polyestergewebe war, das mit Weich-Polyvinylchlorid (Weich-PVC) beschichtet war (Hersteller: Firma Planex Technik in Textil GmbH, 67071 Ludwigshafen am Rhein). Zwischen der ersten und der zweiten Deckschicht war eine Zwischenschicht aus einem hitzebeständigen Material angeordnet. Bei diesem Material handelte es sich um ein hochtemperaturbeständiges zweilagiges Glas-Textilgewebe, das beidseitig mit Polyurethan mit Aluminiumpigmenten beschichtet war (iso-TEX^{®} 610-G2 der Firma RALICKS GmbH Industrie- und Umwelttechnik, 46459 Rees). Die beiden Deckschichten wurden durch die Zwischenschicht hindurch über Nähte miteinander verbunden. Als Garn für die Herstellung der Nähte wurde ein Umspinnzwirn aus einem Polyester-Multifilamentkern, der mit Baumwollfasern umsponnen ist, verwendet (Bezeichnung "Rasant 75" der Firma Amann & Söhne GmbH & Co. KG, 74357 Bönnigheim).

Die kleinere der beiden Schutzmatten war quadratisch und hatte im ausgebreiteten Zustand eine Kantenlänge von 630 mm. Die größere der beiden Schutzmatten war rechteckig. Ihre Abmessungen im ausgebreiteten Zustand waren 1350 x 830 mm. Bei beiden Schutzmatten waren Nähte durchgehend parallel zu den Kanten in einem Abstand von 250 mm zueinander ausgeführt, sodass sich ein Schachbrettmuster der Nähte ergab. Beide Schutzmatten wiesen einen umlaufenden Rand auf, der entlang von Biegelinien faltbar war. Die Höhe des Randes war jeweils 50 mm. Auf jeder Seite der Rechtecke waren in dem der Biegelinie zugewandten Teil des Randes auf die Längsausdehnung der Kanten bezogen mittig Verstärkungselemente in Form von Nähten mit einer Länge von 100 mm angebracht. Durch Auffalten der Ränder entstand aus der flachen Matte eine Wanne mit einer Höhe von ca. 50 mm. Die Ränder jeder Kante waren in jeder Ecke miteinander vernäht. Die Grundflächen der Wannen ergaben sich zu 530 x 530 mm im Fall der kleineren Matte und zu 1250 x 730 mm im Fall der größeren Matte.

Die größere Schutzmatte wurde auf ihre elektrische Leitfähigkeit hin untersucht. Dazu wurde die Matte über einen Zeitraum von 72 Stunden bei einer Temperatur von 23°C und einer relativen Luftfeuchtigkeit von 20%rH konditioniert. Anschließend wurden der Oberflächenwiderstand und der Durchgangswiderstand senkrecht zur Oberfläche der Schutzmatte ermittelt. Zur Ermittlung wurde ein Messgerät "Megohmmeter M 1500P" (Firma Sefelec, 77185 Lognes, Frankreich) verwendet. Bei einer angelegten Spannung von 100 V wurden als Oberflächenwiderstand Werte von 2 bis 3,8 kOhm und für den Durchgangswiderstand Werte von 2 bis 2,7 kOhm ermittelt. Die Schutzmatte war somit elektrisch leitfähig und eignet sich bei entsprechender Erdung für den Einsatz in explosionsgefährdetem Umfeld. Sie stellt keine Gefahr hinsichtlich des potenziellen Entstehens von Zündfunken aufgrund statischer Aufladung dar.

Die chemische Beständigkeit des Oberflächenmaterials PVC der Deckschichten erwies sich für den geplanten Einsatz als hinreichend, insbesondere im Hinblick auf die Beaufschlagung der Matte mit Spritzern oder kleineren Tropfmengen an Säuren oder Laugen.

Die Schutzmatte erwies sich somit als umfänglich und vielseitig verwendbar für den Einsatz in der chemischen Prozessindustrie.

## Patentansprüche

1. Schutzmatte umfassend eine erste Deckschicht, eine zweite Deckschicht und eine zwischen der ersten Deckschicht und der zweiten Deckschicht angeordneten Zwischenschicht aus einem hitzebeständigen Material, das einer Temperatur von 1.000°C dauerhaft standhält, wobei die erste Deckschicht und die zweite Deckschicht aus einem elektrisch leitfähigen Material gefertigt und über elektrisch leitfähige Verbindungselemente miteinander verbunden sind, **dadurch gekennzeichnet, dass** die Verbindungselemente Garne oder Fäden sind, und die Befestigung der Verbindungselemente an den Deckschichten durch eine Naht oder mehrere Nähte gebildet wird, und wobei unter elektrisch leitfähig verstanden wird, dass der Oberflächenwiderstand gemessen gemäß der Beschreibung maximal 10⁴Ω (Ohm) beträgt.

2. Schutzmatte nach Anspruch 1, **dadurch gekennzeichnet, dass** das Material der ersten und/oder der zweiten Deckschicht ausgewählt ist aus der Gruppe der Weich-Polyvinylchloride (Weich-PVC, PVC-P).

3. Schutzmatte nach Anspruch 1 oder 2, **dadurch gekennzeichnet, dass** das Material der ersten und/oder der zweiten Deckschicht ein säurebeständiger Kunststoff ist.

4. Schutzmatte nach einem der Ansprüche 1 bis 3, **dadurch gekennzeichnet, dass** das Material der Zwischenschicht ein Gewebe, Gestrick oder Vlies auf Basis von Glasfasern und/ oder Keramikfasern ist.

5. Schutzmatte nach einem der Ansprüche 1 bis 4, **dadurch gekennzeichnet, dass** das Material der Verbindungselemente ausgewählt ist aus der Gruppe der elektrisch leitfähigen Kunststoffe oder Kunststoff-Mischmaterialien, bevorzugt elektrisch leitfähige Polyester-Mischmaterialien, insbesondere elektrisch leitfähige Polyester-Baumwoll-Mischmaterialien.

6. Schutzmatte nach einem der Ansprüche 1 bis 5, **dadurch gekennzeichnet, dass** die Garne oder Fäden Kunststoff-Mischmaterialien sind, bei denen ein Kern der Faser aus einem nicht leitfähigen Kunststoff, bevorzugt einem Polyesterwerkstoff, mit einem leitfähigen Material ummantelt ist, bevorzugt mit Baumwolle oder Carbon.

7. Schutzmatte nach einem der Ansprüche 1 bis 6, **dadurch gekennzeichnet, dass** an jeder Stelle der Schutzmatte ihr Ableitwiderstand den Maximalwert von 10⁴ Ω (Ohm) nicht übersteigt.

8. Schutzmatte nach einem der Ansprüche 1 bis 7, **dadurch gekennzeichnet, dass** die Nähte als mindestens zwei Scharen von Nahtreihen ausgeführt sind, wobei die Nähte in jeder Schar parallel zueinander verlaufen, die mindestens zwei Scharen sich in einem Winkel von 30° bis 90° schneiden, und der Abstand zwischen zwei Nahtreihen einer Schar von 10 bis 50 cm beträgt.

9. Schutzmatte nach einem der Ansprüche 1 bis 8, **dadurch gekennzeichnet, dass** die Schutzmatte einen umlaufenden Rand aufweist, der entlang von Biegelinien faltbar ist, wobei in dem der Biegelinie zugewandten Teil des Randes zumindest teilweise Verstärkungselemente, insbesondere Nähte, vorhanden sind.

10. Schutzmatte nach einem der Ansprüche 1 bis 9, **dadurch gekennzeichnet, dass** mindestens ein Befestigungsmittel an mindestens einer Außenkante oder mindestens einem Rand der Schutzmatte vorhanden ist.

11. Verwendung einer Schutzmatte nach einem der Ansprüche 1 bis 10 zur Abdeckung von durchlässigen Tragböden, insbesondere Gitterrosten.

## Claims

1. A protective mat comprising a first outer layer, a second outer layer, and an interlayer which is disposed between the first outer layer and the second outer layer and is composed of a heat-resistant material that withstands a temperature of 1000°C in a sustained manner, wherein the first outer layer and the second outer layer are manufactured from an electrically conductive material and are connected to one another via electrically conductive connecting elements, wherein the connecting elements are yarns or filaments, and the securing of the connecting elements to the outer layers is formed by a thread or multiple threads, and wherein "electrically conductive" means that the surface resistance measured according to the description is not more than 10⁴ Ω (ohms).

2. The protective mat according to claim 1, wherein the material of the first and/or second outer layer is selected from the group of the soft polyvinylchlorides (soft PVC, PVC-P).

3. The protective mat according to claim 1 or 2, wherein the material of the first and/or second outer layer is an acid-resistant polymer.

4. The protective mat according to any of claims 1 to 3, wherein the material of the interlayer is a weave, knit or nonwoven based on glass fibers and/or ceramic fibers.

5. The protective mat according to any of claims 1 to 4, wherein the material of the connecting elements is selected from the group of the electrically conductive polymers or mixed polymer materials, preferably electrically conductive mixed polyester materials, especially electrically conductive mixed polyester-cotton materials.

6. The protective mat according to any of claims 1 to 5, wherein the yarns or filaments are mixed polymer materials in which a core of the fiber, composed of a non-conductive polymer, preferably a polyester material, is ensheathed by a conductive material, preferably by cotton or carbon.

7. The protective mat according to any of claims 1 to 6, wherein the discharge resistance at any point in the protective mat does not exceed the maximum value of 10⁴ Ω (ohms).

8. The protective mat according to any of claims 1 to 7, wherein the threads are designed as at least two arrays of rows of threads, where the threads in each array run parallel to one another, the at least two arrays intersect at an angle of 30° to 90°, and the distance between two rows of threads in an array is from 10 to 50 cm.

9. The protective mat according to any of claims 1 to 8, wherein the protective mat has a circumferential edge which is foldable along bending lines, with reinforcing elements, especially threads, being present at least to some degree in the part of the edge facing the bending line.

10. The protective mat according to any of claims 1 to 9, wherein at least one securing means is present on at least one outer edge or at least one edge of the protective mat.

11. The use of a protective mat according to any of claims 1 to 10 for covering of permeable load-bearing floors, especially grids.

## Revendications

1. Tapis de protection comprenant une première couche de recouvrement, une deuxième couche de recouvrement et une couche intermédiaire disposée entre la première couche de recouvrement et la deuxième couche de recouvrement et réalisée en un matériau résistant à la chaleur qui supporte de manière durable une température de 1000 °C, la première couche de recouvrement et la deuxième couche de recouvrement étant réalisées à partir d'un matériau électriquement conducteur et étant reliées l'une à l'autre par des éléments de liaison électriquement conducteurs, **caractérisé en ce que** les éléments de liaison sont des fils ou des filaments, et la fixation des éléments de liaison aux couches de recouvrement est formée par une couture ou une pluralité de coutures, et l'expression "électriquement conducteur' signifiant que la résistance de surface, mesurée selon la description, est au maximum de 10⁴ Ω (ohms).

2. Tapis de protection selon la revendication 1, **caractérisé en ce que** le matériau de la première et/ou de la deuxième couche de recouvrement est choisi dans le groupe des chlorures de polyvinyle souples (PVC souple, PVC-P).

3. Tapis de protection selon la revendication 1 ou 2, **caractérisé en ce que** le matériau de la première et/ou de la deuxième couche de recouvrement est une matière synthétique résistant aux acides.

4. Tapis de protection selon l'une des revendications 1 à 3, **caractérisé en ce que** le matériau de la couche intermédiaire est un tissu, un tricot ou un non-tissé à base de fibres de verre et/ou de fibres céramiques.

5. Tapis de protection selon l'une des revendications 1 à 4, **caractérisé en ce que** le matériau des éléments de liaison est choisi dans le groupe des matières synthétiques ou des matières synthétiques mixtes électriquement conductrices, de préférence des matières mixtes polyester électriquement conductrices, notamment des matières mixtes polyester-coton électriquement conductrices.

6. Tapis de protection selon l'une des revendications 1 à 5, **caractérisé en ce que** les fils ou filaments sont des matières plastiques mixtes dans lesquelles une âme de la fibre en matière synthétique non conductrice, de préférence une matière polyester, est enrobée d'une matière conductrice, de préférence du coton ou du carbone.

7. Tapis de protection selon l'une des revendications 1 à 6, **caractérisé en ce que**, en tout point du tapis de protection, sa résistance de fuite ne dépasse pas la valeur maximale de 10⁴ Ω (ohms).

8. Tapis de protection selon l'une des revendications 1 à 7, **caractérisé en ce que** les coutures sont réalisées sous la forme d'au moins deux groupes de rangées de coutures, les coutures de chaque groupe étant parallèles entre elles, les au moins deux groupes se coupant suivant un angle de 30° à 90°, et la distance entre deux rangées de coutures d'un groupe étant de 10 à 50 cm.

9. Tapis de protection selon l'une des revendications 1 à 8, **caractérisé en ce que** le tapis de protection comporte un bord périphérique qui est repliable suivant des lignes de pliage, des éléments de renfort, notamment des coutures, étant présents au moins partiellement dans la partie du bord qui est dirigée vers la ligne de pliage.

10. Tapis de protection selon l'une des revendications 1 à 9, **caractérisé en ce qu'**au moins un moyen de fixation est présent sur au moins un bord extérieur ou sur au moins un bord du tapis de protection.

11. Utilisation d'un tapis de protection selon l'une des revendications 1 à 10 pour recouvrir des sols porteurs perméables, notamment des caillebotis.
